# EUROPEAN PATENT SPECIFICATION

(11) **EP 0 686 522 B1**
(45) Date of publication and mention of the grant of the patent: **30.12.1998**
(21) Application number: 95107983.9
(22) Date of filing: 24.05.1995
(51) Int. Cl.: B60K 1/04, B62K 19/30

(54) **Battery attaching/detaching structure in motor-assisted bicycle**
Vorrichtung für den Ein- und Ausbau einer Batterie für ein Fahrrad mit Hilfsmotor
Structure de montage et de démontage d'une batterie pour bicyclette à moteur auxiliaire

(30) Priority: 11.06.1994 JP 152725/94
(43) Date of publication of application: 13.12.1995
(73) Proprietor: HONDA GIKEN KOGYO KABUSHIKI KAISHA, Minato-ku, Tokyo (JP)
(72) Inventor: Iseno, Mitsuru, c/o K.K. Honda Gijutsu Kenkyusho, Wako-shi, Saitama (JP); Yamaguchi, Masaaki, Wako-shi, Saitama (JP)
(74) Representative: Liska, Horst, Dr.-Ing.

(56) References cited:
- EP-A- 0 561 268
- PATENT ABSTRACTS OF JAPAN vol. 018, no. 136 (M-1572), 7 March 1994 & JP 05 319104 A (YAMAHA MOTOR CO LTD), 3 December 1993,
- PATENT ABSTRACTS OF JAPAN vol. 017, no. 240 (M-1409), 14 May 1993 & JP 04 365690 A (YAMAHA MOTOR CO LTD), 17 December 1992,
- PATENT ABSTRACTS OF JAPAN vol. 017, no. 229 (M-1406), 11 May 1993 & JP 04 358986 A (YAMAHA MOTOR CO LTD), 11 December 1992,

## Description

The present invention relates to a motor-assisted bicycle having a motor to use motive power of the motor for assisting man power propelling the bicycle, and more particularly to an attaching/detaching structure of a battery for supplying electric power to the motor to/from a vehicle body of the motor-assisted bicycle.

### Related Art

In a motor-assisted bicycle, a motor is provided in a power transmitting system for transmitting a depression force applied to pedals to a wheel, and an output from the motor is controlled according to the depression force applied to the pedals. Further, a battery for supplying electric power to the motor is provided.

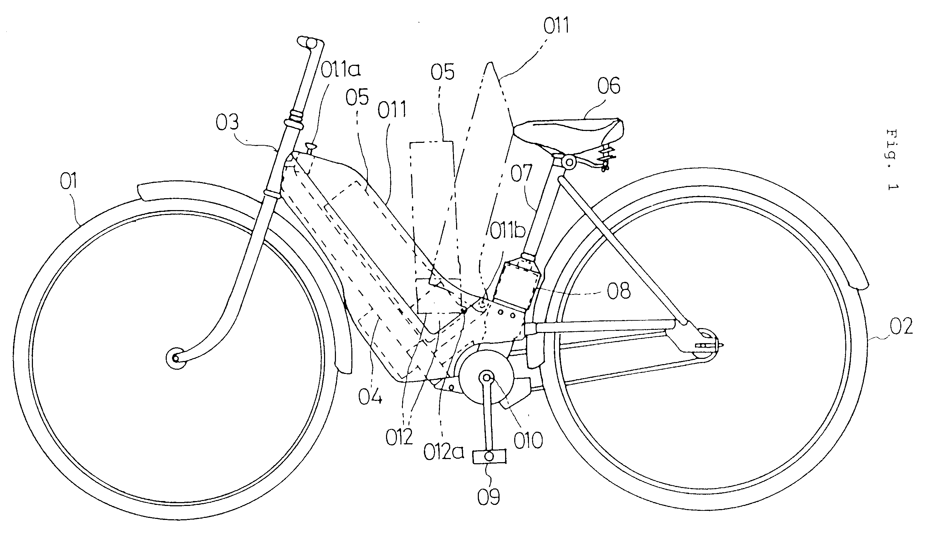

Fig. 1 is a side view of a motor-assisted bicycle described in Japanese Patent Laid-open No. Hei 5-319104.

A main frame having a V-shape as viewed in side elevation is provided between a front wheel 01 and a rear wheel 02. A down tube 04 of the main frame extends rearward and downward from a head pipe 03. An elongated battery case 05 is provided along the down tube 04. A seat tube 07 of the main frame extends rearward and upward from the lower end of the down tube 04 toward a seat 06. A motor 08 is provided on the seat tube 07. A pedal crank 09 is located at a V-shaped lowermost portion of the main frame. There is provided at the V-shaped lowermost portion a gear mechanism for reducing a driving force of the motor 08 in speed and transmitting it to a crankshaft 010 supporting the pedal crank 09.

The battery case 05 is covered with an exterior cover 011. The exterior cover 011 can be opened by opening a lock device 011a provided at the front end of the exterior cover 011 and then upward pivoting the exterior cover 011 about a pivot shaft 011b provided at the rear upper end of the exterior cover 011.

A support box 012 is detachably provided at the lower end of the battery case 05. The support box 012 can be upward pivoted together with the battery case 05 about a pivot shaft 012a. In Fig. 1, the upward pivoted condition of the battery case 05 and the support box 012 is shown by a phantom line.

In this condition, the battery case 05 can be detached from the support box 012, thus being removed from a vehicle body.

### Problem to be Solved by the Invention

In removing the battery case 05 from the vehicle body, the lock device 011a is first opened, and then the exterior cover 011 is pivoted upward to thereby expose the battery case 05. Then, a clamp (not shown) is removed and the battery case 05 is pivoted upward together with the support box 012. Then, an engaging member (not shown) is removed and the battery case 05 is separated from the support box 012.

In mounting the battery case 05, the operation is performed in the order reverse to the above-mentioned removing operation.

In this manner, the removing and mounting operations are troublesome because many steps must be sequentially carried out. Furthermore, many parts including the pivot shaft 011b, the support box 012, and the exterior cover 011 are required, and the structure is complicated.

It is accordingly an object of the present invention to provide a battery attaching/detaching structure in a motor-assisted bicycle which is simple and can facilitate attaching and detaching of the battery case.

### Means and Operation of Solving the Problem

In a motor-assisted bicycle having a battery and a motor to be driven by electric power of said battery and generate motive power assisting man power; a battery attaching/detaching structure comprising: a battery case for storing said battery, said battery case being configured in the form of elongated box having a substantially quadrangular cross section;a body cover provided obliquely along a down tube extending rearward and downward from a head pipe of said bicycle, said body cover having a recess substantially U-shaped in side elevation, for fittedly supporting said battery case, said recess having an elongated inclined bottom surface which is formed by an upper wall of the body cover and opposed to an elongated lower surface of said battery case and by front and rear inside surfaces which are respectively formed by left and right inclined walls of said body cover and respectively opposed to front and rear end surfaces of said battery case; and wherein said rear inside surface of said recess of said body cover is steeply inclined at an acute angle near a right angle with respect to said inclined bottom surface of said recess; an angle of said rear end surface of said battery case with respect to said lower surface of said battery case is equal to said acute angle of said rear inside surface of said recess with respect to said bottom surface of said recess; and a lock device for disengageably engaging a front end of said battery case.

When the battery case is fitted with the U-shaped recess of the body cover, and the lock device is operated to engage the front end of the battery case, the battery case is fixed at its front portion by the lock device. Further, the rear inside surface of the recess of the body cover is steeply inclined at an acute angle near a right angle with respect to the bottom surface of the recess, and the rear end surface of the battery case is opposed to the steeply inclined rear inside surface of the recess. Therefore, the rear end of the battery case is inhibited from pivoting upward about the front end of the battery case. Thus, the battery case fitted with the recess of the body cover is kept in a fixed condition.

Accordingly, in the fixed condition of the battery case fittedly supported by the recess of the body cover, the battery case cannot be removed unless the lock device is disengaged from the front end of the battery case.

When the lock device is disengaged from the front end of the battery case, the front end of the battery case is allowed to freely move upward. In this condition, the battery case can be removed by upward sliding the battery case as a whole along the rear inside surface of the recess or upward pivoting the front end of the battery case. Thus, the battery case can be easily attached to or detached from the body cover. Further, the attaching/detaching structure of the battery case can be made simple.

The lock device may be provided inside a front end portion of the battery case, and the lock device may have a lock pin projecting rearward to come into engagement with a lock hole formed through the front end surface of the battery case by a locking operation. The lock pin may be retracted from the lock hole by an unlocking operation. Accordingly, the locking and unlocking operations for the battery case can be easily performed by the simple lock device.

The bottom surface and the front inside surface of the recess of the body cover may be formed by left and right separated side covers, and the rear inside surface of the recess may be formed by a center cover. Accordingly, the body cover can be formed by a small number of parts.

### BRIEF DESCRIPTION OF THE DRAWINGS

Fig. 1 is a general side view of a motor-assisted bicycle in the prior art.
Fig. 2 is a general side view of a motor-assisted bicycle according to a preferred embodiment of the present invention.
Fig. 3 is an exploded perspective view of a body cover of the motor-assisted bicycle.
Fig. 4 is a side view of side covers.
Fig. 5 is a fragmentary top plan view of the side covers.
Fig. 6 is a cross section taken along the line VI-VI in Figs. 4 and 5.
Fig. 7 is a cross section taken along the line VII-VII in Figs. 4 and 5.
Fig. 8 is a cross section taken along the line VIII-VIII in Fig. 4.
Fig. 9 is a side view of a center cover.
Fig. 10 is a view taken in the direction of the arrow X in Fig. 9.
Fig. 11 is a side view of a body cover constructed by assembling the side covers and the center cover and a battery case removed from the body cover.
Fig. 12 is a side view of the body cover and the battery case mounted thereon.
Fig. 13 is a view taken in the direction of the arrow XIII in Fig. 12.
Fig. 14 is a top plan view of a discharging connector.
Fig. 15 is a rear elevation of the discharging connector.
Fig. 16 is a cross section taken along the line XVI-XVI in Fig. 15.
Fig. 17 is a top plan view of a connector mounted on the body cover.
Fig. 18 is a rear elevation of the connector. Fig. 19 is a cross section taken along the line
XIX-XIX in Fig. 18.
Fig. 20 is a sectional view of the rear portion of the battery case and the lower portion of the center cover.
Fig. 21 is a top plan view of a body of the battery case at its rear portion.
Fig. 22 is a partially cutaway, side view of the front portion of the battery case in the vicinity of a head pipe.

### Preferred Embodiment

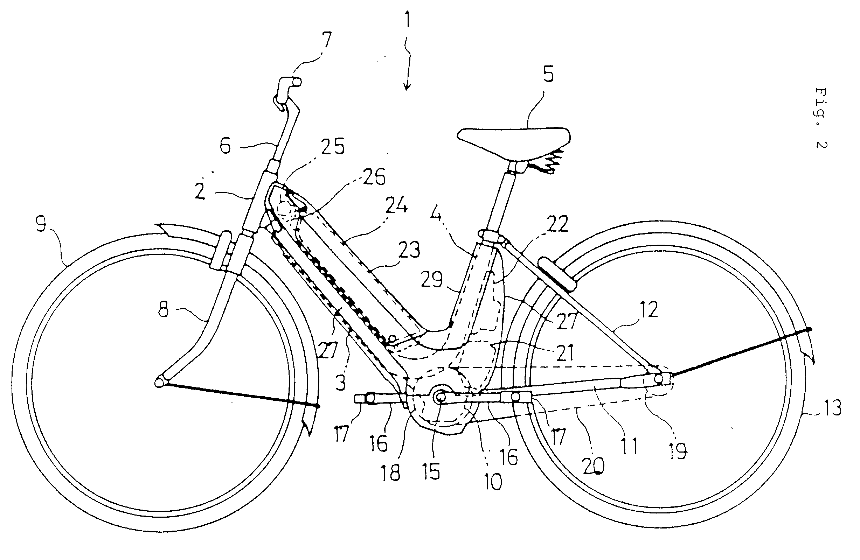

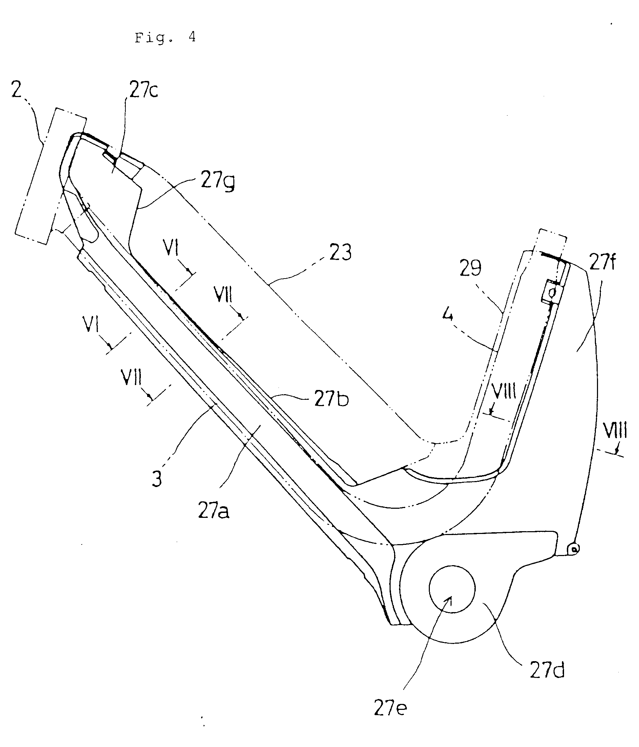

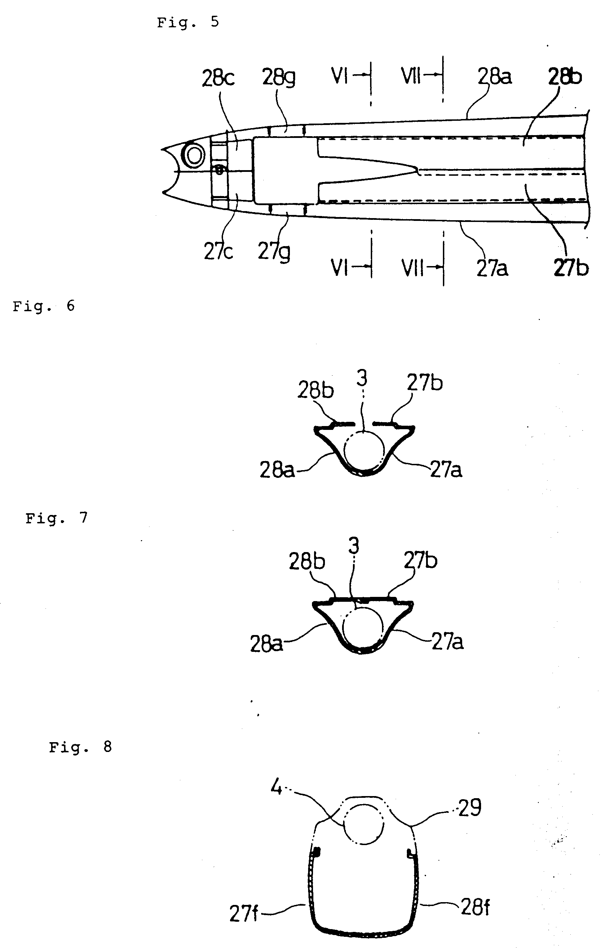

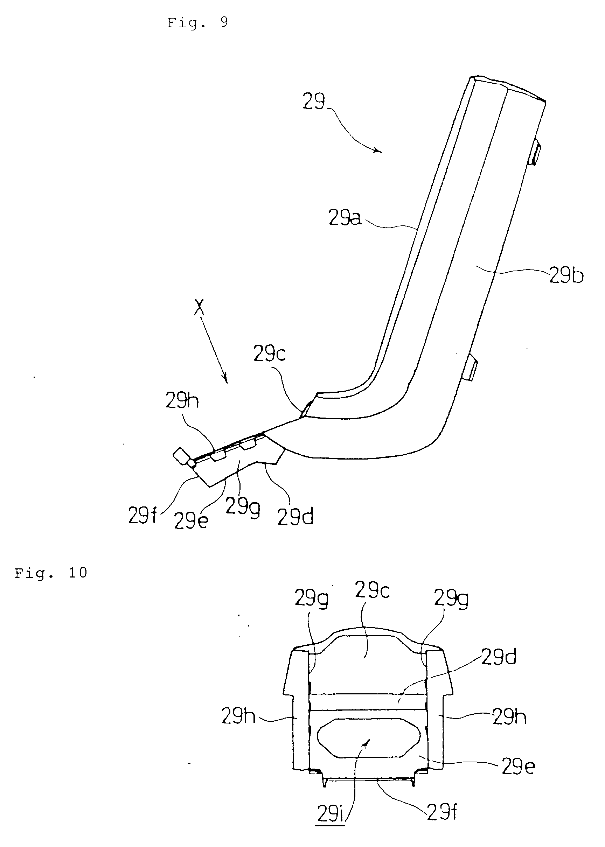

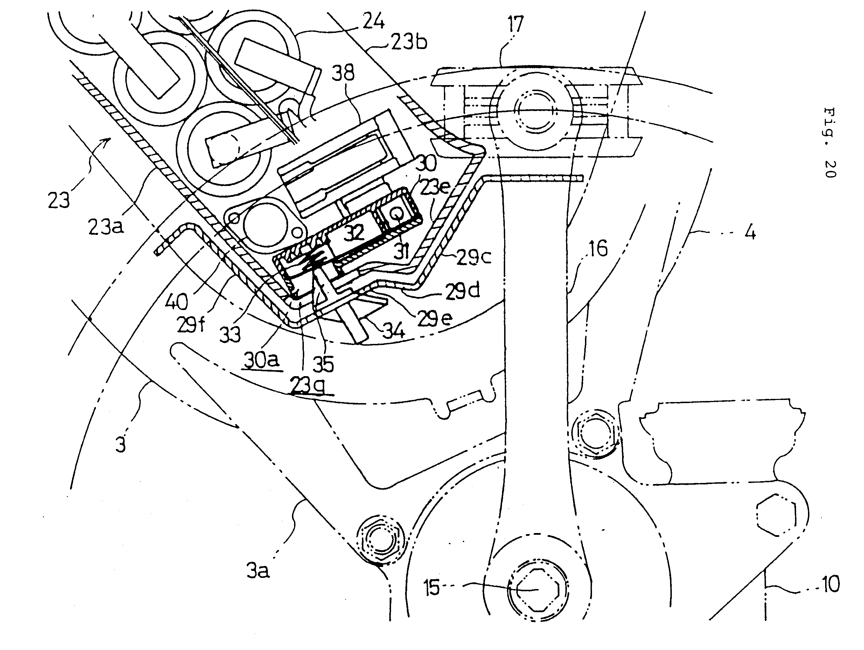

A preferred embodiment of the present invention will now be described with reference to Figs. 2 to 22.

Fig. 2 is a general side view of a motor-assisted bicycle 1 according to the preferred embodiment.

The motor-assisted bicycle 1 includes a head pipe 2, a down tube 3 extending rearward and downward from the head pipe 2, and a seat tube 4 extending rearward and upward from the lower end of the down tube 3 to a seat 5. Thus, the down tube 3 and the seat tube 4 constitute a V-shaped main frame bent at the lower end of the down tube 3.

A steering shaft 6 is pivotably supported to the head pipe 2, and a bar-shaped handle 7 is fixedly supported to the upper end of the steering shaft 6. A front fork 8 extends integrally from the lower end of the steering shaft 6, and a front wheel 9 is rotatably supported to the right and left lower ends of the front fork 8.

A gear box 10 storing a gear mechanism is suspendedly fixed through a bracket 3a (see Fig. 20) to a V-shaped lower end portion of the main frame as the intersection between the down tube 3 and the seat tube 4. A rear fork 11 is fixed at its front end to the gear box 10 and extends rearward. The rear fork 11 is reinforced by a pair of right and left stays 12 extending between the right and left rear ends of the rear fork 11 and the seat tube 4. A rear wheel 13 is rotatably supported to the right and left rear ends of the rear fork 11.

The gear box 10 serves also as a crankcase to rotatably support a crankshaft 15. A pair of right and left crank arms 16 are fixed at their base ends to the opposite ends of the crankshaft 15, and a pair of right and left pedals 17 are provided at the outer ends of the pair of crank arms 16.

A chain 20 is wrapped around a drive sprocket 18 to be rotated by rotation of the crankshaft 15 and a driven sprocket 19 mounted on an axle of the rear wheel 13. When the crankshaft 15 is rotated by a depression force applied to the pedals 17, the rear wheel 13 is rotated through the drive sprocket 18, the chain 20, and the driven sprocket 19, thereby allowing the motor-assisted bicycle 1 to be traveled as a usual bicycle.

A motor 21 is fixed to the gear box 10 so as to be disposed along the seat tube 4. A driving force of the motor 21 is reduced in speed through the gear mechanism and then transmitted to the crankshaft 15, thereby assisting man power.

A control device 22 including an electronic control unit and a motor driver for controlling the operation of the motor 21 is mounted on the rear surface of the seat tube 4 at a position over the motor 21.

The down tube 3 and the seat tube 4 are covered with V-shaped, separated left and right side covers 27 and 28 and a center cover 29. An elongated battery case 23 is detachably mounted on the inclined upper surfaces of the side covers 27 and 28 at their front portions covering the down tube 3, and the battery case 23 itself forms a part of an outer surface of a vehicle body.

A bicycle traveling battery 24 consisting of a plurality of Ni-Cd cells for supplying electric power to the motor 21 is stored in the battery case 23.

A combination switch 25 is provided at a position before the battery case 23. The combination switch 25 serves also to drive a lock device 26 for locking the battery case 23 in its mounted condition.

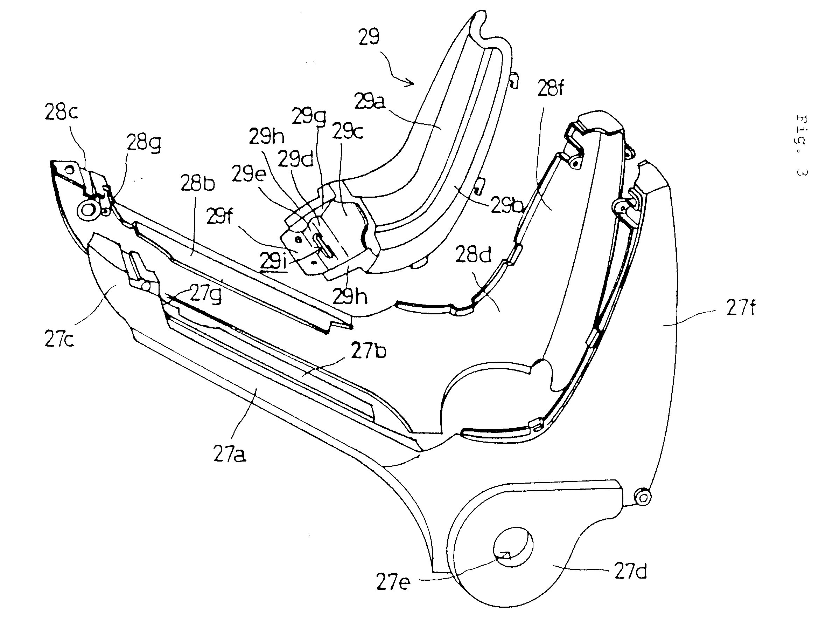

The details of the side covers 27 and 28 and the center cover 29 in the motor-assisted bicycle 1 described above will now be described with reference to Figs. 3 to 10.

Each of the side covers 27 and 28 has a V-shape as viewed in side elevation, and they are substantially symmetrical with each other in the lateral direction of the vehicle. The front half portions of the side covers 27 and 28 include elongated side wall portions 27a and 28a covering the lower surface and both side surfaces of the down tube 3, elongated flat upper walls 27b and 28b covering the upper surface of the down tube 3, and front end portions 27c and 28c projecting upward from the side wall portions 27a and 28a so as to surround the rear surface of the head pipe 2 and define a space for locating the combination switch 25 and the lock device 26 behind the head pipe 2.

The upper walls 27b and 28b are cut away at their front ends to define a space between them and the front end portions 27c and 28c. On the left and right sides of this space, there are formed inclined walls 27g and 28g so as to connect the side wall portions 27a and 28a with the front end portions 27c and 28c.

The V-shaped lowermost portions of the side covers 27 and 28 include central side wall portions 27d and 28d covering both side surfaces of the gear box 10, and the left-handed central side wall portion 27d has a circular hole 27e through which the crankshaft 15 is inserted.

The rear portions of the side covers 27 and 28 are formed as rear wall portions 27f and 28f so curved as to cover the rear surface of the seat tube 4 and define a space between them and the seat tube 4 for locating the motor 21 and the control device 22.

As shown in Figs. 3, 9, and 10, the center cover 29 covering the front surface of the seat tube 4 has a J-shape as viewed in side elevation so as to be vertically elongated and bent at the lower end portion. The laterally central portion of the center cover 29 is formed as a frontward projecting portion 29a extending along the seat tube 4, and left and right side walls 29b are formed so as to curvedly extend rearward from the opposite sides of the central projecting portion 29a. The rear edges of the left and right side walls 29b are fitted with the front edges of the rear wall portions 27f and 28f of the left and right side covers 27 and 28.

The front or lower end of the J-shaped center cover 29 is downward extended to form a four-step inclined surface consisting of four bottom walls 29c, 29d, 29e, and 29f. Further, a pair of opposed vertical side walls 29g are formed at the left and right ends of the bottom walls 29c, 29d, 29e, and 29f. Thus, a recess having a given shape is formed by the bottom walls 29c, 29d, 29e, and 29f and the vertical side walls 29g.

The upper edges of the vertical side walls 29g are bent outward to form a pair of left and right flanges 29h.

The bottom wall 29c forms a steep downward inclined surface having a given angle of inclination, and continues frontward through a substantially horizontal bottom wall 29d to the bottom wall 29e. The bottom wall 29e forms a gentle downward inclined surface, and it has a central large opening 29i. The bottom wall 29e continues frontward to the bottom wall 29f inclined upward.

When the left and right side covers 27 and 28 are assembled together with the main frame interposed therebetween, the front half portions of the side covers 27 and 28 cover the down tube 3 in such a manner that the flat upper walls 27b and 28b extend along the down tube 3 to form an inclined surface, and the rear wall portions 27f and 28f cover the rear surface of the seat tube 4 with a given space defined therebetween.

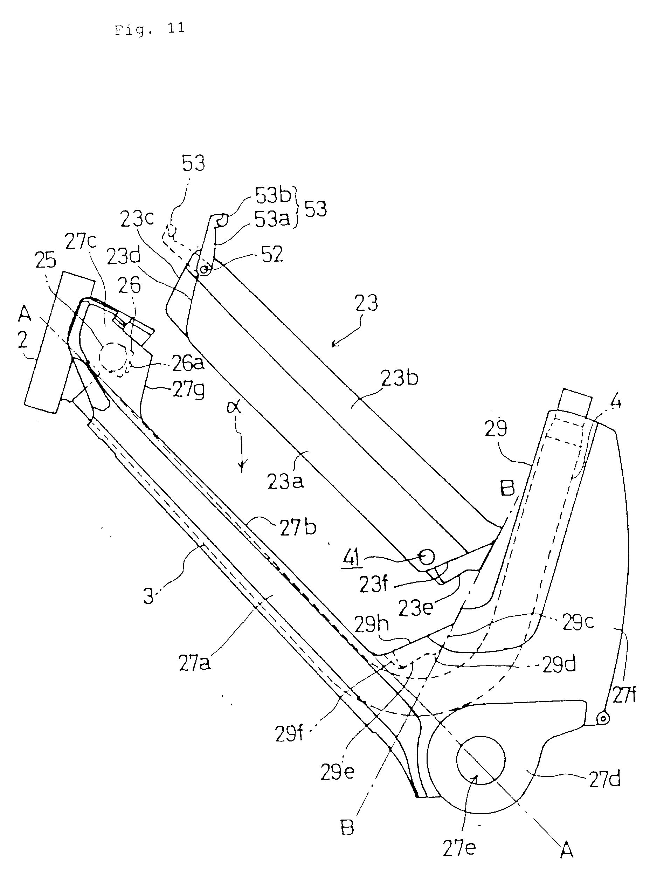

Thereafter, the center cover 29 is placed so as to cover the front surface of the seat tube 4 in such a manner that the left and right side walls 29b of the center cover 29 are continuously joined to the rear wall portions 27f and 28f of the left and right side covers 27 and 28. In this condition, as shown in Fig. 11, the front end portions 27c and 28c continuing to the side wall portions 27a and 28a project upward; the elongated flat upper walls 27b and 28b are inclined downward; and the flanges 29h of the center cover 29 are inclined upward with the bottom walls 29c, 29d, 29e, and 29f forming a given recess; whereby there is defined a substantially U-shaped recess α having an elongated bottom surface as viewed in side elevation.

More specifically, the body cover consisting of the side covers 27 and 28 and the center cover 29 forms the recess α elongated along the down tube 3. The upper walls 27b and 28b of the side covers 27 and 28 form a bottom surface of the recess α. The left and right inclined walls 27g and 28g of the side covers 27 and 28 form a front inside surface of the recess α. The bottom walls 29c, 29d, and 29e of the center cover 29 form a central portion of a rear inside surface of the recess α, and the flanges 29h of the center cover 29 form left and right side portions of the rear inside surface of the recess α.

The battery case 23 is received and supported by the elongated recess α of the body cover.

In particular, as shown in Fig. 11, an inclined surface B-B formed by the upper bottom wall 29c (the rear inside surface of the recess α) of the four bottom walls 29c, 29d, 29e, and 29f opposed to the rear end surface of the battery case 23 is a steep inclined surface near a perpendicular surface with respect to an inclined surface A-A formed by the elongated flat upper walls 27b and 28b (the bottom surface of the recess α).

The battery case 23 is configured in the form of elongated box having a substantially quadrangular cross section, and it is composed of a lower body 23a for storing the battery 24 and an upper lid 23b removably mounted on the lower body 23a. The front end surface, the lower surface, and the rear end surface of the battery case 23 are substantially the same in shape as the front inside surface, the bottom surface, and the rear inside surface of the recess α of the body cover, respectively.

The front end portion of the battery case 23 includes a central front wall 23c somewhat projecting frontward from left and right front walls 23d. Similarly, the rear end portion of the battery case 23 includes a central rear wall 23e somewhat projecting rearward from left and right rear walls 23f.

The left and right front walls 23d of the battery case 23 are formed as inclined surfaces abutting against the inclined walls 27g and 28g forming the front inside surface of the recess α of the body cover. The lower surface of the battery case 23 abuts against the upper walls 27b and 28b forming the bottom surface of the recess α. The left and right rear walls 23f of the battery case 23 are formed as inclined surfaces abutting against the flanges 29h forming the left and right side portions of the rear inside surface of the recess α. The central rear wall 23e of the battery case 23 is formed as a stepped inclined surface having the same shape as that of the stepped inclined surface formed by the bottom walls 29c, 29d, and 29e forming the central portion of the rear inside surface of the recess α. The central rear wall 23e is opposed to the bottom walls 29c, 29d, and 29e with a small gap defined therebetween (see Fig. 20).

The bottom wall 29f of the center cover 29 at its front lower end is parallel to the lower surface of the battery case 23.

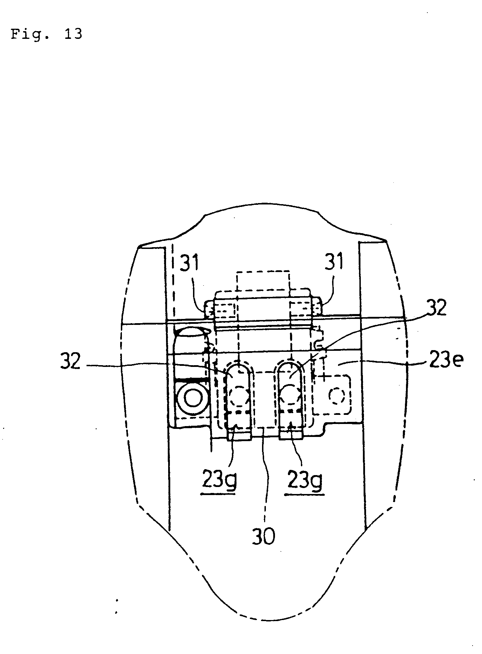

As shown in Fig. 13, a pair of elongated holes 23g are formed through a portion of the central rear wall 23e of the battery case 23 corresponding to the bottom wall 29e of the center cover 29.

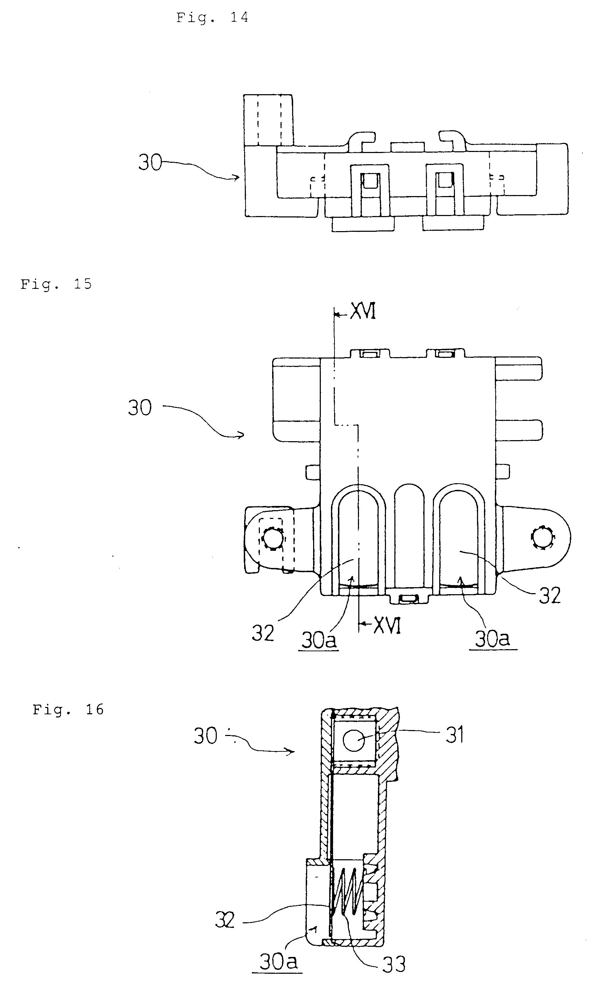

A discharging connector 30 is fixed to the inside surface of the central rear wall 23e of the battery case 23. As shown in Figs. 14 to 16, 20, and 21, the discharging connector 30 is provided with a pair of left and right terminal plates 32 fixed at their upper ends by means of screws 31. Each terminal plate 32 is formed from a copper alloy plate and has elasticity. A spring 33 is provided so as to rearward bias the lower portion of each terminal plate 32. A pair of openings 30a are formed at the lower portion of the discharging connector 30 at positions behind the lower portions of the terminal plates 32, respectively. The pair of openings 30a correspond to the pair of elongated holes 23g of the central rear wall 23e of the battery case 23, respectively (see Fig. 13).

Accordingly, the pair of terminal plates 32 are exposed to the pair of elongated holes 23g of the central rear wall 23e of the battery case 23, respectively.

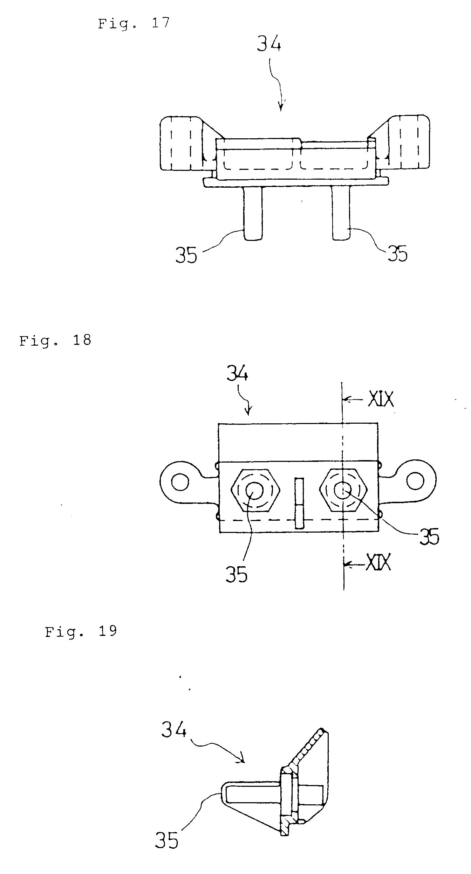

A connector 34 is mounted through the opening 29i of the bottom wall 29e of the center cover 29. As shown in Figs. 17 to 20, the connector 34 has a pair of left and right terminal rods 35 projecting frontward. The pair of terminal rods 35 of the connector 34 are opposed to the pair of terminal plates 32 of the discharging connector 30 mounted inside the battery case 23, respectively.

Accordingly, when the central rear wall 23e of the battery case 23 is fitted with the recess formed at the lower end portion of the center cover 29, the pair of terminal rods 35 of the connector 34 pass through the elongated holes 23g and the openings 30a, and press the pair of terminal plates 32 of the discharging connector 30 against the springs 33, thereby effecting the electrical connection between the discharging connector 30 and the connector 34.

A pair of plus and minus power line cords 36 and 37 extending from the battery 24 are connected at their outer ends to the screws 31 fixing the upper ends of the terminal plates 32 of the discharging connector 30.

Further, a fuse 38 is detachably connected and supported to the discharging connector 30.

A charging connector 40 is fixed to the inside surface of the battery case 23 at its lower portion just inside the left rear wall 23f in such a manner that a connecting portion of the charging connector 40 is directed to the left side. A circular hole 41 is formed through the left lower portion of the battery case 23 at a position opposed to the connecting portion of the charging connector 40.

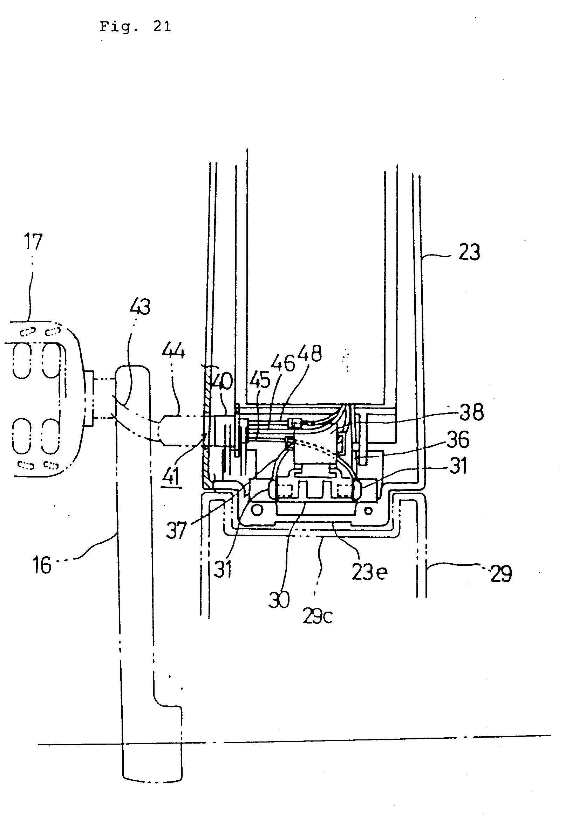

Accordingly, a plug 44 provided at one end of a charging connector cable 43 extending from a charger (not shown) is adapted to be inserted from the circular hole 41 of the battery case 23 and be connected to the connecting portion of the charging connector 40, thus allowing the battery 24 to be charged in the condition where the battery case 23 is mounted in the vehicle body (see Fig. 21).

Connected to the charging connector 40 are a pair of plus and minus power line cords 45 and 46 extending from the battery 24 and a signal line cord 48 for outputting a temperature detection signal from a thermistor (not shown).

Accordingly, the charging connector cable 43 also has a pair of plus and minus power lines and a temperature signal line, and the charger includes a temperature detecting circuit.

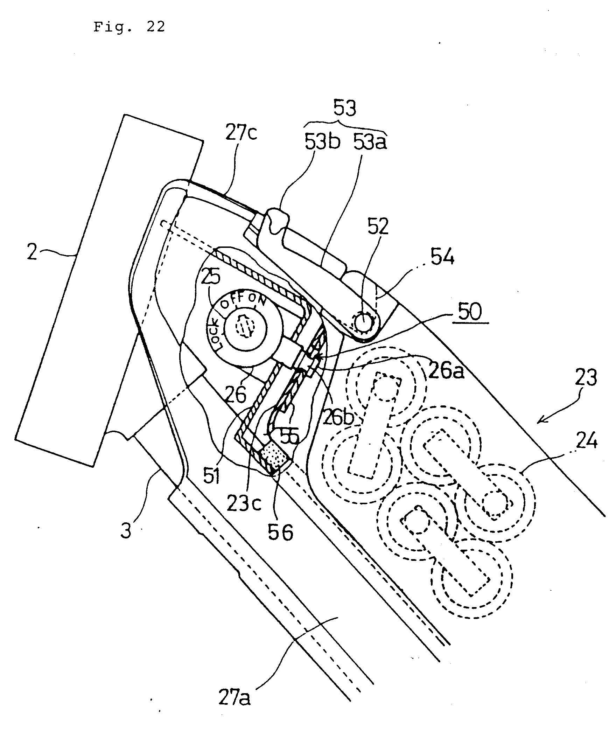

As shown in Fig. 22, a plate 55 forming a part of a support bracket for a grip 53 to be hereinafter described is attached to the inside surface of the central front wall 23c at the front end portion of the battery case 23. A somewhat vertically elongated elliptical lock hole 50 is formed through the central front wall 23c and the plate 55. On the other hand, a support bracket 51 is provided inside the front end portions 27c and 28c of the left and right side covers 27 and 28, and the lock device 26 is fixed to the support bracket 51. The lock device 26 has a lock pin 26a retractably projecting rearward and adapted to be inserted through the lock hole 50 of the central front wall 23c and the plate 55 of the battery case 23. When the lock pin 26a of the lock device 26 is inserted through the lock hole 50, the front end portion of the battery case 23 can be locked by the lock pin 26a.

The lower end of the support bracket 51 for supporting the lock device 26 is bent rearward to extend to a position for receiving the lower surface of the front end portion of the battery case 23. A rubber cushion 56 is fixed to the upper surface of the rear bent portion of the support bracket 51. Accordingly, the battery case 23 is mounted in such a manner that the lower surface of the front end portion of the battery case 23 presses the rubber cushion 56.

Further, a circumferential groove 26b is formed on the lock pin 26a in the vicinity of the rear end thereof. After the lock pin 26a is inserted through the lock hole 50, a lower part of the inner circumferential edge of the lock hole 50 is adapted to engage the circumferential groove 26b of the lock pin 26.

More specifically, in mounting the battery case 23, the front end portion of the battery case 23 received at a given position of the body cover is slightly depressed to elastically deform the rubber cushion 56. In this condition, the lock device 26 is operated by a key to insert the lock pin 26a through the lock hole 50 of the battery case 23. Thereafter, when a depression force applied to the battery case 23 is removed, the lower circumferential edge portion of the lock hole 50 comes into engagement with the circumferential groove 26b of the lock pin 26a by an elastic force of the rubber cushion 56. Thus, a perfect locked condition of the battery case 23 is obtained to prevent rattling of the battery case 23.

Accordingly, the locked condition of the battery case 23 cannot be canceled only by the key operation of the lock device 26 because the lower circumferential edge portion of the lock hole 50 is engaged with the circumferential groove 26b of the lock pin 26a. That is, the locked condition of the battery case 23 can be canceled by first depressing the front portion of the battery case 23 to thereby disengage the circumferential groove 26b of the lock pin 26a from the lower circumferential edge portion of the lock hole 50, and then operating the key under the depressed condition of the battery case 23 to retract the lock pin 26a from the lock hole 50.

The lock device 26 is driven by the combination switch 25 provided on the right side of the lock device 26. The key is adapted to be inserted into a key insert hole opening to the right of the combination switch 25, then allowing a main switch to be turned on and off and also allowing the locking and unlocking operation of the lock device 26.

More specifically, as shown in Fig. 22, the combination switch 25 has three key operating positions of ON, OFF, and LOCK. The ON position is a position where power assisting to the bicycle is to be performed. In the ON position, the lock pin 26a is projected to keep the locked condition of the battery case 23. The OFF position is a position where power assisting to the bicycle is not to be performed. Also in the OFF position, the lock pin 26a is projected to keep the locked condition of the battery case 23. The LOCK position is a position where the unlocking operation of the lock device 26 is to be performed. In the LOCK position, the lock pin 26a is retracted to unlock the battery case 23, and power assisting is not performed, naturally.

Accordingly, only in mounting or removing the battery case 23, the key is operated to set the LOCK position. Usually, the OFF position or the ON position is selected to keep the locked condition of the battery case 23. In requiring power assisting to the bicycle, the ON position is selected, whereas in traveling the bicycle without the power assisting as similar to a usual bicycle or keeping the bicycle stationary, for example, the OFF position is selected.

A grip 53 is vertically pivotably supported to a pin 52 provided at the front upper end portion of the battery case 23.

The grip 53 is composed of left and right arms 53a pivotably supported at their rear ends to the pin 52 and a connecting bar 53b connecting the front ends of the left and right arms 53a. The grip 53 is normally biased to its lowered position by a torsion spring 54.

Accordingly, the grip 53 can be raised against a biasing force of the torsion spring 54 by gripping the connecting bar 53b and then pulling it up, thus facilitating the removal of the battery case 23. In the normal mounted condition of the battery case 23, the grip 53 is kept in its lowered position by the torsion spring 54.

In mounting the battery case 23 on the body cover consisting of the side covers 27 and 28 and the center cover 29, the lower surface of the battery case 23 is set in parallel to the inclined surface A-A formed by the elongated flat upper walls 27b and 28b of the side covers 27 and 28 as shown in Fig. 11. Then, the central rear wall 23e of the battery case 23 is fitted to the inclined surface B-B formed by the upper bottom wall 29c of the center cover 29, and the battery case 23 is moved down along the inclined surface B-B with the above parallel condition being maintained. In this manner, the battery case 23 can be engaged with the body cover.

Alternatively, the battery case 23 may be engaged with the body cover by first fitting the rear portion of the battery case 23 to the lower portion of the center cover 29 and then pivotally lowering the front portion of the battery case 23.

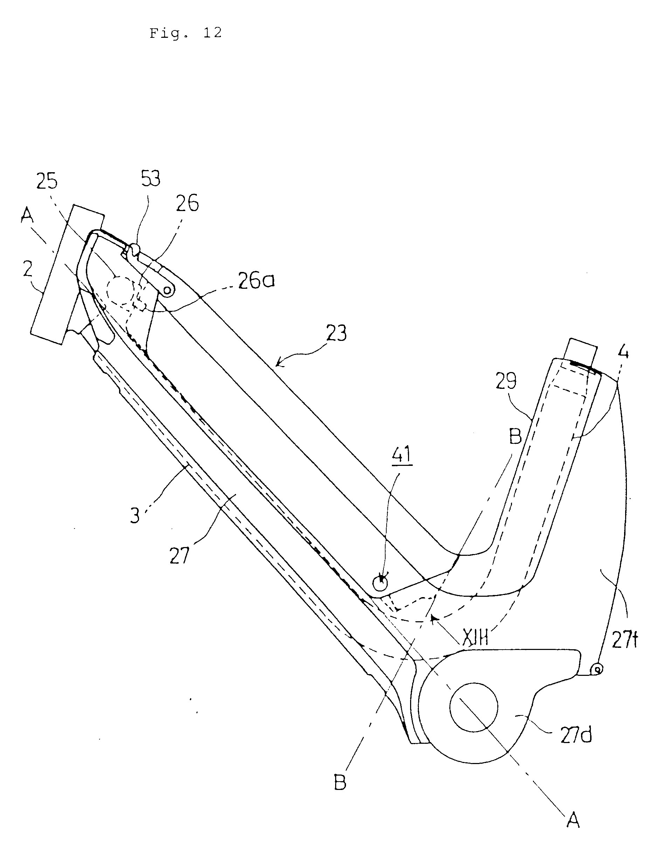

In any manner, the central rear wall 23e of the battery case 23 is guided and received by the recess formed by the bottom walls 29c, 29d, 29e, and 29f and the left and right vertical side walls 29g of-the center cover 29, thereby positioning the central rear wall 23e in the longitudinal and lateral directions of the vehicle body. Furthermore, the central front wall 23c of the battery case 23 is received between the left and right inclined walls 27g and 28g of the front end portions 27c and 28c of the side covers 27 and 28. Furthermore, the lower surface of the battery case 23 abuts against the upper walls 27b and 28b of the side covers 27 and 28 (the bottom surface of the recess α); the left and right front walls 23d of the battery case 23 abut against the left and right inclined walls 27g and 28g of the side covers 27 and 28 (the front inside surface of the recess α); and the left and right rear walls 23f of the battery case 23 abut against the left and right flanges 29h of the center cover 29 (the rear inside surface of the recess α). Thus, the battery case 23 is supported to the body cover as shown in Fig. 12.

As described above, when the front portion of the battery case 23 is slightly depressed and the key is inserted into the key insertion hole of the combination switch 25 to perform the locking operation (the key operation from the LOCK position to the OFF position), the lock pin 26a is projected to enter the lock hole 50 of the central front wall 23c of the battery case 23. Thereafter, when the depression force applied to the front portion of the battery case 23 is removed, the lower circumferential edge portion of the lock hole 50 comes into engagement with the circumferential groove 26b of the lock pin 26a by the elastic force of the rubber cushion 56 to obtain the locked condition of the battery case 23 with possible rattling prevented.

In the locked condition of the battery case 23 obtained by the insertion of the lock pin 26a into the lock hole 50 as shown in Fig. 12, it is needless to say that the front portion of the battery case 23 cannot be pulled upward, and it is to be noted that the rear portion of the battery case 23 cannot also be pulled upward.

More specifically, the upward pulling of the rear portion of the battery case 23 means upward pivotal movement of the battery case 23 about the engaging portion between the lock pin 26a and the lock hole 50. However, since the inclined surface B-B formed by the bottom wall 29c of the center cover 29 (the rear inside surface of the recess α) is a steep inclined surface near a perpendicular surface with respect to the inclined surface A-A substantially parallel to the lower surface of the battery case 23, the central rear wall 23e of the battery case 23 to be pivoted about the engaging portion of the lock pin 26a comes into abutment against the bottom wall 29c of the center cover 29 to inhibit the pivotal movement of the battery case 23. Therefore, the rear portion of the battery case 23 cannot be pulled upward in the locked condition of the battery case 23.

Thus, the locked condition of the battery case 23 obtained by engaging the lock pin 26a of the lock device 26 with the lock hole 50 of the battery case 23 at only one position to inhibit the removal of the battery case 23 can be made perfect, and the locking operation can be simply performed.

In removing the battery case 23 in the unlocked condition thereof, the front portion of the battery case 23 is slightly depressed, and the key is operated in the above depressed condition of the battery case 23 to retract the lock pin 26a of the lock device 26 from the lock hole 50 of the central front wall 23c of the battery case 23. Thereafter, the grip 53 is raised to pull up the front portion of the battery case 23 by gripping the connecting bar 53b of the grip 53. Accordingly, the rear portion of the battery case 23 is removed from the recess formed at the lower portion of the center cover 29. Thus, the battery case 23 can be simply removed after unlocking the battery case 23.

As described above, the body cover in this preferred embodiment is composed of the three parts, that is, the left and right side covers 27 and 28 and the center cover 29. With such a small number of parts, the body cover can be easily assembled. The front portion of the battery case 23 is locked by the engagement of the lock pin 26a of the lock device 26, and the rear portion of the battery case 23 is inhibited from moving upward by the inclined surface B-B formed by the bottom wall 29c of the center cover 29. Thus, the perfect locked condition of the battery case 23 can be obtained only by the engagement of the lock pin 26a with a simple structure.

Furthermore, the battery case 23 can be attached to or detached from the body cover only by the locking or unlocking operation at one position, and the attaching and detaching of the battery case 23 can be very simply performed.

### Effect of the Invention

According to the present invention, the rear inside surface of the recess of the body cover is steeply inclined at an acute angle near a right angle with respect to the bottom surface of the recess, and the rear end surface of the battery case is opposed to the steeply inclined rear inside surface of the recess. Therefore, when the front end of the battery case is engaged with the lock device, the rear end of the battery case is inhibited from pivoting upward about the front end of the battery case locked by the lock device, thus keeping a fixed condition of the battery case. In this manner, the battery case can be reliably supported and locked with a simple battery cover structure. Furthermore, the battery case can be simply attached to or detached from the body cover.

The lock device is provided inside a front end portion of the battery case, and the lock device has a lock pin projecting rearward to come into engagement with a lock hole formed through the front end surface of the battery case by a locking operation. The lock pin is retracted from the lock hole by an unlocking operation. Accordingly, the locking and unlocking operations for the battery case can be easily performed by the simple lock device.

The bottom surface and the front inside surface of the recess of the body cover are formed by left and right separated side covers, and the rear inside surface of the recess is formed by a center cover. Accordingly, the body cover can be formed by a small number of parts.

## Claims

1. In a motor-assisted bicycle having a battery (24) and a motor (21) to be driven by electric power of said battery (24) and generate motive power assisting man power; a battery attaching/detaching structure comprising:
a battery case (23) for storing said battery (24), said battery case (23) being configured in the form of elongated box having a substantially quadrangular cross section;
a body cover (27, 28, 29) provided obliquely along a down tube (3) extending rearward and downward from a head pipe (2) of the bicycle, said body cover (27, 28, 29) having a recess (α) substantially U-shaped in side elevation, for fittedly supporting said battery case (23), said recess (α) having an elongated inclined bottom surface which is formed by an upper wall (27b, 28b) of the body cover and opposed to an elongated lower surface of said battery case (23) and by front and rear inside surfaces (29c) which are respectively formed by left and right inclined walls (27g, 28g) of said body cover and respectively opposed to front and rear end surfaces of said battery case (23);
and wherein said rear inside surface (29c) of said recess (α) of said body cover (27, 28, 29) is steeply inclined at an acute angle near a right angle with respect to said inclined bottom surface of said recess (α);
an angle of said rear end surface of said battery case (23) with respect to said lower surface of said battery case (23) is equal to said acute angle of said rear inside surface (29c) of said recess (α) with respect to said bottom surface of said recess (α); and
a lock device (26) for disengageably engaging a front end of said battery case (23).

2. A battery attaching/detaching structure in a motor-assisted bicycle according to Claim 1, wherein said lock device (26) is provided inside a front end portion of said body cover; and
said lock device (26) has a lock pin (26a) projecting rearward to come into engagement with a lock hole (50) formed through said front end surface of said battery case (23) by a locking operation, said lock pin (26a) being retracted from said lock hole (50) by an unlocking operation.

3. A battery attaching/detaching structure in a motor-assisted bicycle according to Claim 1 or 2, wherein said bottom surface and said front inside surface of said recess (α) of said body cover (27, 28, 29) are formed by left and right separated side covers (27, 28), and said rear inside surface of said recess (α) is formed by a center cover (29).

## Patentansprüche

1. In einem Fahrrad mit Hilfsmotor, das eine Batterie (24) und einen Motor (21) aufweist, der durch elektrische Energie der Batterie (24) anzutreiben ist und zum Erzeugen Muskelkraft unterstützender Antriebskraft dient, umfaßt eine Batterieanbringe/-abnahmestruktur:
ein Batteriegehäuse (23) zum Aufnehmen der Batterie (24), wobei das Batteriegehäuse (23) in Form eines langgestreckten Kastens mit im wesentlichen rechtwinkligem Querschnitt konfiguriert ist;
eine Rumpfabdeckung (27, 28, 29), die schräg entlang einem Schrägrohr vorgesehen ist, das sich von einem Kopfrohr (2) des Fahrrads nach hinten und unten erstreckt, wobei die Rumpfabdeckung (27, 28, 29) eine in Seitenansicht im wesentlichen U-förmige Vertiefung (α) aufweist, um das Batteriegehäuse (23) passend zu halten, wobei die Vertiefung (α) eine langgestreckte schräge Bodenfläche aufweist, die von einer oberen Wand (27b, 28b) der Rumpfabdeckung gebildet ist und einer langgestreckten unteren Fläche des Batteriegehäuses (23) gegenüberliegt, sowie vordere und hintere Innenflächen (29c), die jeweils durch linke und rechte schräge Wände (27g, 28g) der Rumpfabdeckung gebildet sind und jeweils vorderen und hinteren Endflächen des Batteriegehäuses (23) gegenüberliegen;
und wobei die hintere Innenfläche (29c) der Vertiefung (α) der Rumpfabdeckung (27, 28, 29) mit einem spitzen Winkel steil geneigt ist, der einem zur schrägen Bodenfläche der Vertiefung (α) rechten Winkel angenähert ist;
wobei ein Winkel der hinteren Endfläche des Batteriegehäuses (23) zur unteren Fläche des Batteriegehäuses (23) gleich dem spitzen Winkel der hinteren Innenfläche (29c) der Vertiefung (α) zur Bodenfläche der Vertiefung (α) ist; und
eine Sperrvorrichtung (26) zum lösbaren Eingriff an einem Vorderende des Batteriegehäuses (23).

2. Batterieanbringe/-abnahmestruktur in einem Fahrrad mit Hilfsmotor nach Anspruch 1, wobei die Sperrvorrichtung (26) innerhalb eines vorderen Endabschnitts der Rumpfabdeckung vorgesehen ist;
wobei die Sperrvorrichtung (26) einen Sperrstift (26a) aufweist, der nach hinten vorsteht, um durch einen Sperrvorgang in Eingriff mit einem Sperrloch (50) zu treten, welches die vordere Endfläche des Batteriegehäuses (23) durchsetzt, wobei der Sperrstift (26a) durch einen Aufsperrvorgang aus dem Sperrloch (50) zurückgezogen wird.

3. Batterieanbringe/-abnahmestruktur in einem Fahrrad mit Hilfsmotor nach Anspruch 1 oder 2, wobei die Bodenfläche und die vordere Innenfläche der Vertiefung (α) der Rumpfabdeckung (27, 28, 29) durch linke und rechte getrennte Seitenabdeckungen (27, 28) gebildet sind und die hintere Innenfläche der Vertiefung (α) durch eine Mittelabdeckung (29) gebildet ist.

## Revendications

1. Dans une bicyclette à moteur auxiliaire comportant une batterie (24) et un moteur (21) conçu pour être entraîné par une puissance électrique de ladite batterie (24), et pour engendrer une puissance motrice assistant une puissance humaine ; une structure de montage et de démontage comprenant :
un compartiment (23) pour stocker ladite batterie (24), ledit compartiment (23) de la batterie revêtant la forme d'une boîte allongée présentant une section transversale pour l'essentiel quadrangulaire ;
un carénage (27, 28, 29) agencé à l'oblique le long d'une tubulure descendante (3) s'étendant vers l'arrière et vers le bas, à partir d'une tubulure frontale (2) de la bicyclette, ledit carénage (27, 28, 29) comportant un évidement (α) pour l'essentiel configuré en U en élévation latérale afin de supporter, de manière ajustée, ledit compartiment (23) de la batterie, ledit évidement (α) présentant une surface de fond allongée et inclinée qui est formée par une paroi supérieure (27b, 28b) du carénage, située en vis-à-vis d'une surface inférieure allongée dudit compartiment (23) de la batterie, et par des surfaces intérieures (29c) antérieure et postérieure qui sont respectivement formées par des parois inclinées (27g, 28g) de gauche et de droite dudit carénage, et sont respectivement situées en vis-à-vis de surfaces extrêmes antérieure et postérieure dudit compartiment (23) de la batterie ;
et dans laquelle ladite surface intérieure postérieure (29c) dudit évidement (α) dudit carénage (27, 28, 29) est inclinée en pente raide, selon un angle aigu avoisinant un angle droit, par rapport à ladite surface de fond inclinée dudit évidement (α) ;
un angle de ladite surface extrême postérieure dudit compartiment (23) de la batterie, par rapport à ladite surface inférieure dudit compartiment (23) de la batterie, est égal audit angle aigu de ladite surface intérieure postérieure (29c) dudit évidement (α) par rapport à ladite surface de fond dudit évidement (α) ; et
un dispositif de verrouillage (26) conçu pour venir en prise, de manière libérable, avec une extrémité antérieure dudit compartiment (23) de la batterie.

2. Structure de montage et de démontage d'une batterie pour bicyclette à moteur auxiliaire, selon la revendication 1, dans laquelle ledit dispositif de verrouillage (26) est prévu à l'intérieur d'une région extrême antérieure dudit carénage ; et
ledit dispositif de verrouillage (26) présente une targette de verrouillage (26a) saillant vers l'arrière pour venir en prise, par une opération de verrouillage, avec un trou de verrouillage (50) pratiqué à travers ladite surface extrême antérieure dudit compartiment (23) de la batterie, ladite targette de verrouillage (26a) étant rétractée hors dudit trou de verrouillage (50) par une opération de déverrouillage.

3. Structure de montage et de démontage d'une batterie pour bicyclette à moteur auxiliaire, selon la revendication 1 ou 2, dans laquelle ladite surface de fond et ladite surface intérieure antérieure dudit évidement (α) dudit carénage (27, 28, 29) sont formées par des capots latéraux distincts (27, 28) de gauche et de droite, et ladite surface intérieure postérieure dudit évidement (α) est formée par un capot central (29).
